# EUROPEAN PATENT APPLICATION

(11) **EP 0 847 175 A1**
(43) Date of publication of application: **10.06.1998**
(21) Application number: 96119564.1
(22) Date of filing: 05.12.1996
(51) Int. Cl.: H04M 3/40, H04Q 3/66

(54) **Forced inter-switch call routing**

(71) Applicant: AT&T Corp., New York, NY 10013-2412 (US)
(72) Inventor: Ash, Gerald Richard, West Long Beach, NJ 07764 (US); Garoutte, Dana L., Wheaton, IL 60187 (US); Huang, Baosheng D., Bridgewater, NJ 08807 (US); Le Cronier, Richard, New Monmouth, NJ 07748 (US)
(74) Representative: KUHNEN, WACKER & PARTNER

(57) **Abstract**

In a telecommunications network, a call is routed from a first switch (401) to a second switch (402), and from the second switch back to the first switch. Signal processing may be applied to the call between the first and second switches. The call may be received at the first switch on a first type of link (10) and routed back to the first switch on a second type of link (100) having different signalling characteristics than the first type of link. The second switch may be chosen from a plurality of remote switches (402,403) in accordance with an unused capacity of the links between the first switch and each of the remote switches.

## Description

### FIELD OF THE INVENTION

The invention relates to routing of telephone calls in a telecommunications network, and more particularly relates to a method of routing calls to alter the signal characteristics of the call by forcing the call to pass through selected equipment or links.

### BACKGROUND OF THE INVENTION

At the start of a telephone conversation, a caller dials or keys a telephone number into a telephone. The telephone converts the telephone number into an electrical signal and transmits the telephone number signal to a first switch, sometimes referred to as an originating switch. Based on the telephone number which it extracts from the telephone number signal, the originating switch establishes a calling path to the destination. In general, the originating switch is the first switch at which the call arrives in the telecommunications network; it will be appreciated that the call may pass through additional switches prior to arriving at the originating switch and/or subsequent to delivery to the destination switch.

Calls not passing through multiple switches, because the originating switch and the destination switch are the same, are referred to as intra-switch calls.

Calls passing through multiple switches, because the originating switch and the destination switch, sometimes referred to as a remote switch, are different, are referred to as inter-switch calls.

After the calling path is established, the caller speaks into the telephone, and the telephone converts the utterance into a voice signal. At various points along the established path, the voice signal may be processed to improve the signal.

When equipment is located only at certain links, such as inter-switch links, then voice signals for calls will he processed differently depending on the relative locations of the caller and destination. Consequently, there is an undesirable difference in voice quality depending on the intra- or inter-switch routing of a call.

### SUMMARY OF THE INVENTION

In accordance with the present invention, method and apparatus are provided for receiving a call at a first switch in a telecommunications network, routing the call from the first switch to a second switch, and routing the call from the second switch back to the first switch.

Signal processing may be applied to the call between the first and second switches.

The call may be received at the first switch on a first type of link and routed back to the first switch on a second type of link having different signalling characteristics than the first type of link.

The second switch may be selected from a plurality of remote switches in accordance with an unused capacity of the links between the first switch and each of the remote switches.

Also in accordance with the present invention, method and apparatus are provided for receiving a call at a switch, and routing the call through a link from the switch back to itself, the link having both ends coupled to the switch.

### BRIEF DESCRIPTION OF THE DRAWINGS

Fig. 1 is a block diagram of a telecommunications network in which the present invention may be practiced; and
Fig. 2 is a flowchart illustrating the steps of the present invention.

### DETAILED DESCRIPTION

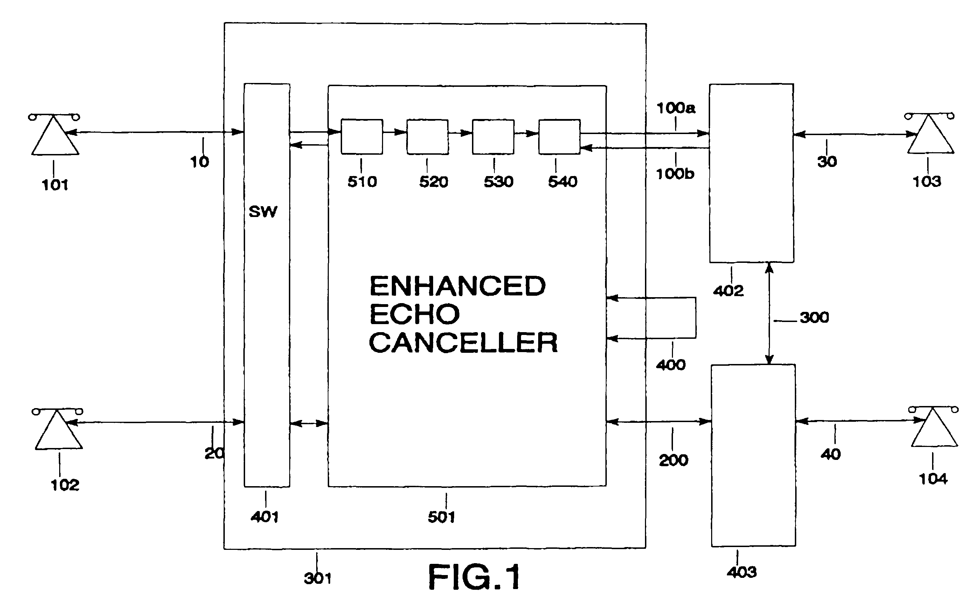

Turning now to Fig. 1, there is shown a block diagram of a telecommunications network including telephones 101-104, office 301, switches 401-403, enhanced echo canceller 501, code converters 510, 540, digital filter 520, echo canceller processor 530, local links 10-40, inter-switch links 100, 200, 300 and loop around link 400. All links are bidirectional. For convenience, only inter-switch link 100 is shown as comprising two one-way transmission paths 100a, 100b.

An office includes at least one switch and may also include signal processing equipment. For example, office 301 is shown as including switch 401 and enhanced echo canceller 501, which functions as signal processing equipment.

Switch 401 may be the well-known No. 4 ESS switch. Switch 401 includes a processor, memory, routing matrix and storage for, among other things, a control program. Switch 401 is operable under the control of its stored control program to receive call set up requests, to set up calls such as circuit switched calls, including determining the routing of the call through switches, and to co-operate in providing a communication path for a call. A method for routing of a call is described in, for example, U.S. Patent No. 5,101,451 (Ash et al.), the disclosure of which is incorporated herein by reference. Switch 401 maintains a call routing table which identifies, for each call in progress, the path of the call including the links and switches through which the call is routed.

Enhanced echo canceller 501 selectively amplifies by a predetermined level the transmitted voice signals within a predetermined low frequency range, e.g., 100-300 Hz, relative to the remainder of the voice signal passband, to restore the level of speech energy attenuated by the telephone which produced the voice signal, as described in U.S. Patent No. 5,195,132, corresponding to E.P. 91311044.1, the disclosure of which is incorporated herein by reference. A transmitting telephone attenuates signals below 300 Hz to reduce ambient noise, but most telephone users prefer to listen to enhanced speech in which the transmitter attenuation is offset, despite the attendant increase in background noise, rather than speech devoid of such enhancement.

As explained in U.S. Patent No. 5,195,132, equipment 501 includes converter 510 which converts a voice signal encoded in the well-known mu-255 law format to linear format. Digital filter 520 is operative to raise the energy level of the linear format voice signal below 300 Hz by, for example, 10-15 decibels. Echo canceller 530 compares transmitted speech signals received via path 100a with signals propagating in an opposite direction via path 100b, and cancels the latter signals if they are found to be echoes of previously transmitted speech signals. Converter 540 operates in a complementary manner to converter 510, that is, converts a speech signal in linear format to a speech signal in mu-255 law format.

A call from telephone 101 to telephone 102 is an intra-switch call, as the routing path ordinarily comprises link 10 from telephone 101 to switch 401 and link 20 from switch 401 to telephone 102, that is, only one switch is included in the routing path.

A call from telephone 101 to telephone 103 is an inter-switch call, as the routing path requires at least two switches, namely, switches 401 and 402, which are coupled by inter-switch link 100.

It will be appreciated that, because the signal processing equipment 501 is disposed in the routing path between switch 401 and another switch, intra-switch calls do not usually pass through equipment 501, and so the signals of these calls are not enhanced by equipment 501.

According to the inventive technique, calls which would ordinarily be intra-switch calls are routed through a selected inter-switch link, thereby forcing such calls to pass through equipment 501 for processing, and become inter-switch calls. The calls are then routed back to the originating switch. In other words, for these calls, a path is established which includes a "forced loop". Advantageously, the selected inter-switch link is chosen in accordance with its unused capacity. For example, inter-switch links carrying above a predetermined threshold of traffic are not used for forced loops, to avoid blocking inter-switch calls which must be routed through the inter-switch links to connect the source telephone to the destination telephone.

Certain types of calls may be exempt from application of the inventive technique, such as voiceband data calls, digital data calls, calls subject to call gapping controls, and calls on direct connected lines (e.g., business calls which do not pass through a first switch). Customers may also indicate that their calls should be exempt from the inventive technique.

Call gapping is a type of control which blocks calls. Call gapping allows particular calls, such as calls to a specific 800 number or of a specific type (e.g., domestic or international), to he accepted only every n seconds, where n is a selectable threshold value. Only the first arriving call in an n-second interval is accepted; the rest are rejected. Hence, call gapping reduces the call arrival rate to 1/n per second.

In the system of Fig. 1, the control program executed by switch 401 is modified to operate as described below.

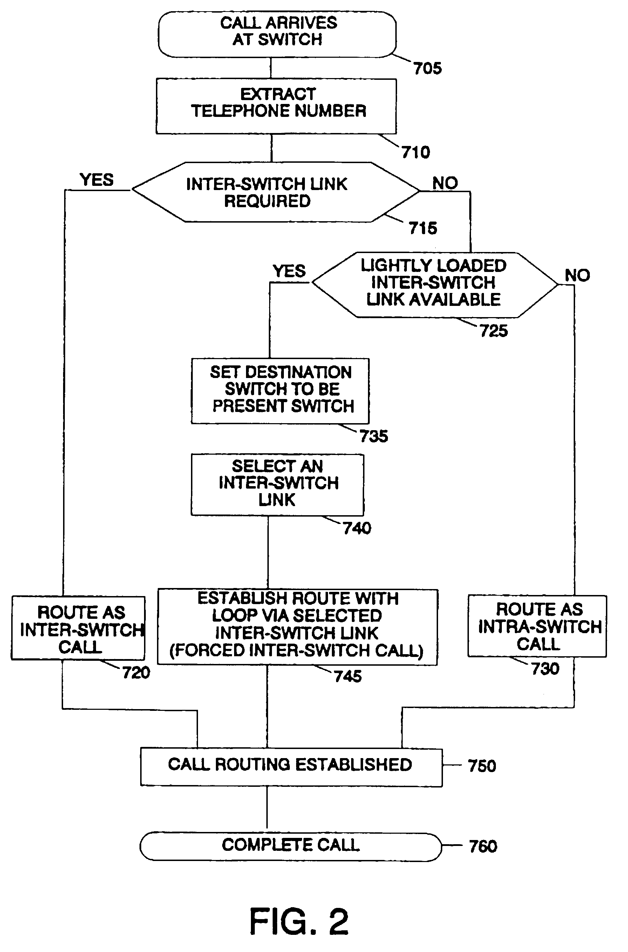

Fig. 2 is a flowchart illustrating call set-up according to the inventive technique. Let it be assumed that a user has specified a telephone number using telephone 101. At step 705, switch 401 receives the call. At step 710, switch 401 extracts the telephone number from signalling information that may, for example, be passed over link 10.

At step 715, switch 401 determines whether the telephone number is accessible through one of the local links coupled thereto, that is, whether an inter-switch link is required to route the telephone call. If an inter-switch link is required, which would be the case if the telephone number was associated with telephone 103 or 104, then at step 720, switch 401 performs conventional processing to route the call to a second switch, such as switch 402 or 403.

If the telephone number, such as for telephone 102, is accessible through one of the local links directly coupled to switch 401, then an inter-switch link is not strictly required. However, it is desirable to force the call to pass through an inter-switch link so that it is processed by the signal processing equipment disposed at the inter-switch link. At step 725, the switch 401 determines whether any of its inter-switch links are lightly loaded. A link is lightly loaded if its bandwidth available for routing calls, that is, not including bandwidth reserved for other purposes, exceeds a predetermined threshold, evaluated on a call by call basis.

If no inter-switch links are lightly loaded, then at step 730, switch 401 performs conventional processing to route the call to switch via link 20, that is, forced inter-switch call routing is inhibited.

If at least one lightly loaded inter-switch link is available, at step 735, switch 401 updates its call routing table to indicate that the destination of the call is itself, i.e., switch 401. At step 740, switch 401 selects an inter-switch link, advantageously, the least loaded link. In other embodiments, inter-switch links are selected in round robin fashion from among links loaded below a certain threshold. Let it be assumed that link 200 is the selected link. At step 745, switch 401 performs processing to route the call back to itself via link 200, and then via link 20 to telephone 102. Switch 401 may set software indicators to identify the call as a forced inter-switch call, that is, an otherwise intra-switch call with forced inter-switch routing.

At step 750, for the intra-switch call from telephone 101 to telephone 102, when a lightly loaded inter-switch link is available, a call route has been established which ensures that the otherwise intra-switch call voice signal receives the same processing as it would receive if it was an inter-switch call voice signal. At step 760, the call is completed in a conventional manner.

The forced inter-switch routing of otherwise intra-switch calls can be automatically or manually disabled by switch 401 or by a network management controller (not shown). For example, assuming the capacity of the links has been chosen based on expected call volumes, if an unusual condition exists, such as a traffic surge in which the call volume on a link exceeds its expected volume, then this link is indicated to be unavailable for calls experiencing forced inter-switch routing. Traffic surges can occur, for example, on mass calling to an 800 number after broadcast of a television commercial, or on peak traffic days such as Mother's Day. Conditions such as blocked inter-switch calls exceeding a given threshold in a given time can turn off the forced inter-switch call routing for intra-switch calls. The forced inter-switch routing can subsequently be automatically or manually enabled by the switch or the network management controller.

As an alternative arrangement, the signal processing for the call could be performed after the call is received through an inter-switch link, instead of before the call is transmitted through the inter-switch link, as described above.

The signal processing can occur in a switch, rather than in separate equipment.

As another alternative arrangement, the forced loop may use a link other than an inter-switch link. For example, loop around link 400 for routing of a call from switch 401 back to itself may be established and used for intra-switch calls.

The inventive technique may be used to reduce the variety of software required at a switch. In certain enhanced services, such as described in U.S. Patent No. 5,384,831 (Creswell et al.), the disclosure of which is incorporated herein by reference, a switch requires a software program adapted for each type of link signalling characteristics. If a switch lacks a software program adapted for a particular type of link signalling characteristics, then that type of link is an unsupported link type. If a switch has a software program adapted for a particular type of link signalling characteristics, then that type of link is a supported link type. Using the inventive technique, a switch receives an incoming call on an unsupported link type (a first type of link), such as an international link, and then routes the call to a second switch and back to itself through a supported link type (a second type of link having different signalling characteristics than the first type of link), to ensure that the call receives processing for the enhanced service. An example of an enhanced service is one in which, if the destination does not answer in a predetermined time, the originating switch attempts to complete the call at another destination.

The inventive technique is not limited to voice signals, and may be used on other types of signals.

The inventive technique is not limited to circuit switched calls, and may also be used on other types of calls, such as packet switched calls.

The foregoing is merely illustrative of the principles of the invention. Those skilled in the art will be able to devise numerous arrangements, which, although not explicitly shown or described herein, embody these principles and are within their spirit and scope.

## Claims

1. A method for routing a call in a telecommunications network, comprising the steps of:
receiving the call at a first switch,
routing the call from the first switch to a second switch, and
routing the call from the second switch back to the first switch.

2. The method of claim 1, further comprising the step of applying signal processing to the call between the first and second switches.

3. The method of claim 2, wherein the step of applying signal processing includes amplifying a predetermined low frequency range of the signal associated with the call.

4. The method of claim 1, wherein the call is received at the first switch on a first type of link and wherein the call is routed back to the first switch on a second type of link, the first and second types of links being different.

5. The method of claim 1, further comprising the step of selecting the second switch from among a plurality of remote switches.

6. The method of claim 5, wherein the first switch is coupled to each of the plurality of remote switches by a respective link, and wherein the step of selecting is in accordance with an unused capacity of the respective links.

7. The method of claim 5, wherein when none of the respective links has unused capacity exceeding a predetermined threshold, the steps of routing are inhibited.

8. The method of claim 1, further comprising the step of disabling the steps of routing based on a blocking condition for calls between the first and second switches.

9. A method for routing a call in a telecommunications network, comprising the steps of:
receiving the call at a switch, and
routing the call through a link from the switch back to itself, the link having both ends coupled to the switch.

10. The methof of claim 9, further comprising the step of applying signal processing to the call between the switch and the link having both ends coupled to the switch.

11. A telecommunications network for routing a call, comprising:
a first switch for receiving the call, and
at least one processor programmed to route the call from the first switch to a second switch and from the second switch back to the first switch.

12. The telecommunications network of claim 11, further comprising equipment for applying signal processing to the call, the equipment located between the first and second switches.

13. The telecommunications network of claim 11, wherein the call is received at the first switch on a first type of link and is routed from the second switch back to the first switch on a second type of link, the first and second types of links having different signalling characteristics.

14. A telecommunications network for routing a call, comprising:
a switch for receiving the call,
a link having both ends coupled to the switch, and
a processor programmed to route the call through the link.

15. The telecommunications network of claim 14, further comprising equipment for applying signal processing to the call, the equipment located between the switch and one of the ends of the link having both ends coupled to the switch.
